# EUROPEAN PATENT APPLICATION

(11) **EP 4 513 512 A2**
(43) Date of publication of application: **26.02.2025**
(21) Application number: 25150166.4
(22) Date of filing: 29.08.2017
(51) Int. Cl.: G21H 1/00

(54) **METHOD AND APPARATUS FOR PRODUCING ENERGY FROM METAL ALLOYS**

(30) Priority: 30.12.2016 FI 20167018
(62) Divisional of application: 17886275.1
(71) Applicant: Kovacs, Andras, 02360 Espoo (FI); Brown, David, 00140 Helsinki (FI); Ek, Fredrik, 02580 Sjundeå (FI)
(72) Inventor: Kovacs, Andras, 02360 Espoo (FI); Brown, David, 00140 Helsinki (FI); Ek, Fredrik, 02580 Sjundeå (FI)
(74) Representative: Papula Oy

(57) **Abstract**

A method and apparatus for energy production comprising providing reactive material containing, at least, an exothermic double electron capture capable isotope and supplying pair-formation energy to at least part of the reactive material to form at least one irreversible double electron capture capable nuclei-pair to produce a net exothermic reaction is disclosed. The reactive material may comprise a metallic alloy.

A method and apparatus for energy production comprising heating a three or more element metallic alloy in a chemically inert atmosphere to initiate and/or sustain an exothermic reaction between at least two of the metallic elements of the alloy is herein disclosed. The pressure at the surface of the metallic alloy may be maintained below 1000 atm. The reaction may be initiated, maintained or reinitiated by temperature cycling within a target temperature range. The heat from the reaction may be converted to electric energy by means of a stacked thermophotovoltaic arrangement, comprising a hot surface, a first stage photovoltaic element, a photoemissive LED and a second stage photovoltaic element.

## Description

### FIELD OF THE INVENTION

The present invention relates to energy generation and to heat-to-electricity energy conversion. More specifically, the invention discloses a method and apparatus for energy production from three or more component metal alloys.

The present invention additionally relates to means to convert said energy to electricity.

### BACKGROUND OF THE INVENTION

New energy technologies for the future replacement of fossil-fuel based energy sources are urgently needed by society and are under intense research. Ongoing "beyond-fossil" energy research may be broadly split into technologies a) relying on direct or indirect harnessing of the incoming power from the Sun, and b) nuclear technologies. The present invention is believed to fall in the nuclear technology category, although a definite proof of the underlying physical processes requires further investigation. While the present invention provides similar energy and power density as nuclear fission based technologies, it can be differentiated by allowing for essentially radioactivity-free reactor design.

Other preceding radioactivity-free nuclear inventions mainly relate to energy generation based on Nickel-Hydrogen and Palladium-Deuterium fuel couples. The industrialization of these preceding inventions is not straightforward, preventing the commercial exploitation of such preceding inventions to date.

An energy generating reaction arising within a metallic alloy has great potential utility. The presently disclosed invention facilitates its industrial utilization by the virtues of its reliable start-up, good controllability, and sufficiently high power density. Based on the reaction control requirements of the newly discovered underlying process, the invention further discloses the construction of an electric energy producing equipment, representing the preferred harnessing of the underlying heat-producing physical process. The production of energy from certain metal alloys and the technology for optimal electricity conversion from such energy producing processes are complementing aspects of the disclosed invention.

### SUMMARY OF THE INVENTION

The first aim of the present invention is to disclose the method and apparatus for energy production from a three or more component metal alloy at elevated temperature. As a preferred embodiment, Lithium and Nickel containing alloys are disclosed, though other metals are possible according to the invention. As a more preferred embodiment, a Li-Ni-Cu system for energy production is disclosed. The simplicity of the Li-Ni-Cu system and its relatively wide temperature cycling range are particularly useful for commercial exploitation. Not to be bound by theory, it is believed that an energy producing reaction may be triggered by solid-molten partial phase changes of the metal alloy, and may be kept continuously ongoing by temperature cycling around the phase-change temperature region. The presently obtained average reaction power was found to be on the order 10 W/g with respect to the metal alloy mass, while the peak power during temperature cycling was found to be on the order 100 W/g with respect to the metal alloy mass.

In addition to describing the preferred embodiment, the invention discloses a family of materials, which may produce energy according to the reaction mechanism and operating principle disclosed herein.

The second aim of the present invention is to disclose a method and apparatus for electricity production on the basis of the abovesaid energy producing reaction. We disclose a novel thermophotovoltaic energy conversion method, based on a stack of photovoltaic and photo-emitting semiconductor surfaces. The disclosed technology surpasses the energy conversion efficiency of prior art thermophotovoltaic technologies. Based on the requirements of the underlying energy generation process, the disclosed electricity producing equipment is discovered to meet the following set of requirements: operability at the melting temperatures of the disclosed metal alloys, close to 50% efficiency of heat-to-electricity conversion, simple implementation of fast temperature cycling, and scalability from compact-sized embodiments up to power plant-sized embodiments.

A method for energy production comprising heating a three or more element metallic alloy in an atmosphere essentially chemically inert to the metallic elements of the alloy to initiate and/or sustain an exothermic reaction between at least two of the metallic elements of the alloy is herein disclosed. Preferably, the metallic alloy elements comprise any combination of lithium, nickel, calcium, and gadolinium, and may also comprise additional alloying metals. Preferably, the pressure at the surface of the metallic alloy is maintained below 1000 atm. More preferably, two of the metallic alloy elements comprise lithium and nickel. The reaction may be initiated, maintained or re-initiated by temperature cycling within a target temperature range. Preferably, the temperature range is within the phase change temperature range of the chosen metallic alloy.

Moreover, an apparatus for energy production comprising a vessel for containing a three or more element metallic alloy is disclosed. The apparatus may further employ means for maintaining an essentially chemically inert environment around the metallic alloy. The apparatus may further employ means for cycling the temperature of the alloy within a target temperature range.

Moreover, a method for producing electric energy from heat is disclosed, wherein the conversion from heat energy to electric energy is performed by means of a stacked thermophotovoltaic arrangement, comprising: providing a hot surface, providing a first stage photovoltaic element having a surface facing the hot surface to produces a first stage electricity output, providing a photoemissive LED surface on the back-side of the first stage photovoltaic element and providing a second stage photovoltaic element with a surface facing the forward-biased photovoltaic element to produce a second stage electricity output. Preferably, the hot surface is coated by a frequency-selectively emissive material. Preferably, the photoemissive LED surface on the back-side of the first stage photovoltaic surface is controlled through the application of forward voltage bias. This may serve to optimize emissivity. Preferably, temperature cycling of the hot surface is accomplished by controlled passing or reflecting of thermal radiation between the hot surface and the first stage photovoltaic surface. The hot surface may be provided by the described method and apparatus for energy production.

The hot surface may be provided by other methods and apparati for energy production.

Moreover, an apparatus for producing electric energy from heat, comprising one or more hot surfaces, one or more first stage photovoltaic surfaces facing said one or more hot surfaces, a photoemissive LED surface on the back-side of said one or more first stage photovoltaic surfaces and one or more second stage photovoltaic surfaces facing the one or more first stage photovoltaic surfaces is disclosed. Preferably, all or part of the hot surfaces are coated by a frequency-selectively emissive material. The apparatus my further comprise means for controlling the photoemissive LED surface on the back-side of said one or more first stage photovoltaic surfaces through the application of forward voltage bias. The apparatus may further comprise means to control the passing or reflecting of thermal radiation between the hot surface and the first stage photovoltaic surface.

This may serve to control the temperature cycling of the hot surface. The hot surface may be provided by the described method and apparatus for energy production.

The hot surface may be provided by other methods and apparati for energy production.

According to one embodiment of the invention, a method for energy production comprises:
a) providing reactive material containing, at least, an "exothermic double electron capture capable isotope" (EDECCI); and
b) supplying pair-formation energy to at least part of the reactive material to form at least one "irreversible double electron capture capable nuclei-pair" (IDECCNP) to produce a net exothermic reaction.

A "reactive material" here means material, which may be placed in a reactor, used to generate energy by the irreversible double electron capture by the nucleus of one or more EDECCIs. The reactive material comprises, at least, an EDECCI and may further contain other components which may include, for instance, one or more "low atomic weight materials" (LAWMs) and/or one or more modifying materials.

A "low atomic weight material" (LAWM) is an atomic isotope whose mass number is, preferably, less than the atomic mass number of the EDECCI, and more preferably less than half the atomic mass number of the EDECCI and more preferably less than 30 and more preferably less than 20 and more preferably, less than 10 and most preferably, less than 7 or any mixture thereof. Examples of LAWMs include, but are not limited to lithium, helium, hydrogen and deuterium or any mixture thereof.

An "exothermic double electron capture capable isotope" (EDECCI) is here defined as an atomic isotope whose nucleus is capable of undergoing exothermic double electron capture. The EDECCI nucleus may contain at least one proton or neutron. Examples of EDECCIs include but are not limited to ⁵⁸Ni and ⁴⁰Ca and any mixture thereof.

An "irreversible double electron capture capable nuclei-pair" (IDECCNP) is a close proximity nuclei-pair between an EDECCI and some other nucleus, where the second nucleus may be same or different type from the EDECCI. An IDECCNP may be an EDECCI-LAWM nuclei pair. In this case, one nucleus is an EDECCI and one nucleus is a LAWM. An IDECCNP may generate a nuclear reaction. The nuclear reaction may be irreversible. The nuclear reaction may be spontaneous.

The irreversibility of the said nuclear reaction may be enabled by having an other nucleus, preferably a LAWM, in close proximity with the EDECCI nucleus. Electrons involved in the double electron capture may be available in the material or may be introduced externally from the material.

"Close proximity" here means having a sufficiently short enough bond distance to induce irreversibility of the double electron capture reaction.

A "net exothermic reaction" is a reaction where the sum of the individual steps in the reaction result in a net excess of energy. Thus, any single step may be endothermic, but the overall reaction may be exothermic. A net exothermic reaction may be a nuclear reaction. A nuclear reaction may be a nuclear transmutation reaction. A nuclear transmutation reaction may be the conversion of one chemical element or an isotope into another. Because any element (or isotope of one) is defined by its number of protons (and neutrons) in its atoms, i.e. in the atomic nucleus, nuclear transmutation occurs in any process where the number of protons or neutrons in the nucleus is changed. A transmutation can be achieved by nuclear reactions (in which an outside particle reacts with a nucleus). A net exothermic reaction may be a double electron capture reaction. A net exothermic double electron capture reaction may be a net exothermic double electron capture nuclear reaction. Any of the described reactions or any combination thereof may be termed a reaction.

A "double electron capture reaction" or "double electron capture" may be a decay mode of an atomic nucleus. For a nuclide (A, Z) with number of nucleons A and atomic number Z, double electron capture is only possible if the mass of the nuclide of (A, Z-2) is lower. In this mode of decay, two of the orbital electrons are captured by two protons in the nucleus, forming two neutrons. Two neutrinos may be emitted in the process. Since the protons are changed to neutrons, the number of neutrons increases by 2, the number of protons Z decreases by 2, and the atomic mass number A remains unchanged. By changing the number of protons, double electron capture transforms the nuclide into a new element. A double electron capture reaction may be a nuclear reaction, a net exothermic double electron capture reaction, a net exothermic double electron capture nuclear reaction and/or a transmutation or a transmutation reaction.

All or part of the pair-formation energy may be supplied externally from outside of the reactive material. The externally supplied pair-formation energy may be supplied by one or more high energy particles, electromagnetic radiation, an electric current, an impact and/or high-frequency vibration of the reactive material.

All or part of the pair-formation energy may be supplied internally from inside of the reactive material. The net exothermic reaction may be maintained by periodic or continuous generation of pair-formation energy. A string reaction may be maintained, at least in part, by internally supplied pair-formation energy. All or part of the internally supplied pair-formation energy may be from the energy released from a net exothermic reaction within the reactive material and/or from melting, solidifying and/or fracturing of all or part of the reactive material. The net exothermic reaction may be a double electron capture reaction of one or more IDECCNPs. Double electron capture reaction energy may maintain a string reaction in the reactive material.

An IDECCNP may comprise a metastable s-shell bond between the inner-most electron shell orbital of an EDECCI and an LAWM nucleus.

Double electron capture reactions may generate at least one energetic reaction product. One or more of the energetic reaction products may maintain a string reaction in the reactive material by generating multiple IDECCNPs. One or more string reactions may be initiated by energetic atomic or sub-atomic particles. The generation of energetic reaction product may be achieved by an initiating double electron capture reaction, by high energy ion bombardment, by high energy electron bombardment, by high energy photon radiation, by neutron bombardment, or by a background neutron.

The reactive material may further comprise one or more modifying materials. The modifying material may be a melting point modifying material, a fracture-inducing material, a material causing molten/solid phases to have different Fermi levels, and/or a saturating material. Some or all of the reactive material may be molten during the reaction. The EDECCI may be, for instance, ⁵⁸Ni and/or ⁴⁰Ca. The melting point modifying material may be, for instance, Cu and/or Al. The reactive material may be a reactive alloy. The reactive alloy may be, for instance, Ni-Li-Cu alloy. Secondary exothermic nuclear reactions involving one or more high-energy LAWMs may contribute to the overall energy production.. The temperature of the reactive material is cycled within a target temperature range to generate one or more IDECCNPs within the reactive material. The target temperature range may be the phase change temperature range of the reactive material or any component thereof.

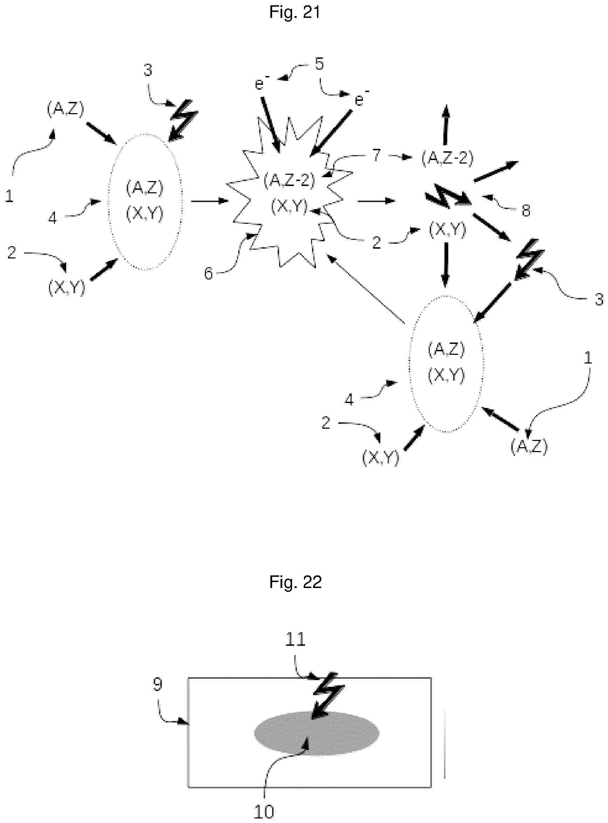

Fig. 21 describes an embodiment of the method in which an EDECCI (1) and a second nucleus (2), together with pair-formation energy (3) form a IDECCNP (4). The EDECCI (4) absorbs two electrons (5) to form an excited nucleus (6) comprising a transmuted EDECCI (7), while the second nucleus (2) remains unchanged. The second nucleus (2) may be any type, but an LAWM is preferred. The individual nuclei of the excited IDECCNP (6) may then fly apart to form individual transmuted EDECCI (7), second nuclei (2) and excess kinetic energy (8). Some or all of said excess kinetic energy my act as pair-formation energy (3) and lead to the formation of one or more new IDECCNPs (4), driving a string reaction. Here (A,Z) is an EDECCI (1) with A nucleons and Z protons, (A,Z-2) is a transmuted EDECCI (7) with A nucleons and Z-2 protons, and (X,Y) is a second nucleus (2) with X nucleons and Y protons.

According to one embodiment of the invention, a device for energy production is described comprising:
a) a reaction chamber containing at least a reactive material, containing at least one EDECCI; and
b) means of supplying pair-formation energy to all or part of the reactive material.

The reactive material may further comprise a LAWM. The LAWM may be lithium, helium, hydrogen or deuterium or a mixture thereof. Means of supplying pair-formation energy may be a furnace, a particle accelerator, an electromagnetic radiation source, a current source, and/or a high frequency vibration sources. The reactive material further comprises one or more modifying materials. The modifying material may be a melting point modifying material, a fracture-inducing material, a material causing molten/solid phases to have different Fermi levels, and/or a saturating material. The EDECCI may be, for instance, ⁵⁸Ni and/or ⁴⁰Ca. The melting point modifying material may be Cu and/or Al. The reactive material may be a reactive alloy. The reactive alloy may be Ni-Li-Cu alloy. The device may further comprise means for cycling the temperature of the alloy within a target temperature range.

Fig 22 describes an embodiment of the device comprising the vessel (9) containing the reactive material (10) and means of supplying pair-formation energy to the reactive material (10).

According to one embodiment of the invention, a method for energy production is described comprising the steps of providing a material, wherein at least one atomic component comprises an exothermic double electron capture capable isotope (an EDECCI), and wherein the double electron capture reaction becomes irreversible. The irreversibility of the said nuclear reaction is enabled by having an other nucleus, preferably of a low atomic weight material (an LAWM) in close enough proximity with the EDECCI nucleus. Said close proximity may enable the nuclear excitation energy of the transmuted EDECCI to be transformed into kinetic energy of the nuclei pair. Said material is here termed a "reactive material". An EDECCI's nucleus may become excited by an exothermic double electron capture reaction or double electron capture. Upon the transformation of the transmuted EDECCI's nuclear energy into the kinetic energy of said close-proximity nuclei (i.e. the nuclei of the IDECCNP), they may rapidly separate according to the laws of energy and momentum conservation. Upon such interaction, these close proximity nuclei, in particular a LAWM nuclei, may obtain high kinetic energy, and in turn, interact with the other nuclei of the reactive material to produce a gradually growing cascade of nuclei having gradually decreasing kinetic energy.

Some past experiments [1, 2] have indicated the possibility of metastable inner-most electron shell binding between any two nuclei, involving s-type bonding by the two innermost electrons of the electron shell. The energy barrier for such inner-most electron shell binding (the pair-formation energy) is proportional to the atomic number of the paired nuclei, and the binding distance is inversely proportional to the atomic number of the paired nuclei. As ⁵⁸Ni is a prominent EDECCI, examples are given for paired nuclei involving Ni. The exact values of the energy barrier and bond distance depend on the electron screening energy in the reactive material. High electron screening reduces the binding energy barrier and increases the bond distance. Consequently, the pair-formation energy required to form an IDECCNP varies according the the EDECCI and, if present, the LAWM. In case of a Ni-Ni pair, the binding energy barrier (the pair-formation energy) is about 400 eV, and the bond distance is about 7 pm. In case of a Ni-Li pair, the binding energy barrier is about 80 eV. In case of a Ni-H pair, the binding energy barrier is about 50 eV. Therefore such metastable inner-most electron shell binding is easiest established when Ni is paired with a light nuclei, such as lithium, hydrogen, or deuterium. It has been surprisingly discovered, that the above-said inner-most electron shell binding brings the paired nuclei into sufficient proximity for irreversible double electron capture reactions. Thereby, this type of nuclei pairing enables energy production from EDECCI materials.

Some of the high-energy ions cascading from a double electron capture may have sufficient energy to surpass the abovesaid inner-most electron shell binding energy barrier and to thereby establish new pairs between an EDECCI nucleus and an other nucleus. When one double electron capture reaction results in the formation of one or more new IDECCNPs, the conditions for a string reaction may be established. In case of the Ni-Li pair, one double electron capture event generates sufficient energy for the theoretical production of over 20 new Ni-Li pairs. It has been surprisingly discovered that the actual new pair formation rate depends on the phase of the reactive material; molten state metallic alloys have higher new formation rate of such new IDECCNPs than their solid state equivalent. Molten state reactive material is therefore preferred for sustaining continuous energy production.

By such successive transmutation of EDECCIs by said double electron capture processes, a string reaction may be sustained, leading to the continuous production of energy. In order to avoid degradation of the reactive material, such as by chemical reactions, the reactive material may be maintained in an atmosphere which is essentially chemically inert to the reactive or to the components of the reactive material.

A "reaction", according to the invention may be any exothermic double electron capture reaction, which may transmute the nucleus of an EDECCI from one element to another. In such a reaction, the first electron capture may be endothermic, while, the second electron capture may be exothermic. In particular, the second electron capture may be more exothermic than the first electron capture is endothermic, thus, the overall reaction may be exothermic and may generate excess energy. To overcome the endothermic barrier of the first electron absorption, the EDECCI nucleus and the electron may approach each other at a sufficiently high relative speed. A neutrinoless double electron capture may also take place through the nearly simultaneous capture of two electrons in the EDECCI; in this case there is no energy barrier for the reaction, but the condition for irreversibility is crucial. It is important to note that the ⁵⁸Ni isotope is stable under ordinary conditions because the nearly simultaneous capture of two electrons is always reversed back to the initial condition, after a short-lived excitation of the ⁵⁸Ni nucleus.

A "High energy" or "energetic" electron is here understood to mean an electron having a kinetic energy above the endothermic barrier for single electron capture in the EDECCI nucleus. A "High energy" or "energetic" nuclei is here understood to mean a nucleus having a kinetic energy above the energy barrier for establishing a IDECCNP with the EDECCI through metastable inner-most electron shell binding. A "high energy" or "energetic" particle may be an energetic electron, an energetic nuclei or any other particle. High energy particles may be introduced by, e.g., ion bombardment or electron bombardment.

For initiating the string reaction, said IDECCNP may be generated directly or indirectly. Various means of IDECCNP generation are disclosed in the following paragraphs. Indirect generation may be accomplished by energetic ions, which in turn produce a cascade of ions having sufficient energy for metastable pair formation. This may be achieved through the abovesaid inner-most electron shell binding process. Impacting the reactive material by energetic ions, neutrons, or electrons may therefore initiate the string reaction. An accelerating device may be used for this purpose. An example of such an accelerating device may be, for instance, a particle accelerator. The particle accelerator my be, for instance, an electrostatic particle accelerator or an electrodynamic (electromagnetic) particle accelerator. The electrodynamic (electromagnetic) particle accelerator may be, for instance, a magnetic induction accelerator, a linear accelerator or a circular or cyclic RF accelerator. Neutrons or accelerated atomic or subatomic particles may be directed to impact on or in a reactive alloy to initiate or trigger the string reaction.

A "modifying material" here means any material that modifies a property of the reactive material. Modifying materials may include, for instance, materials which modify the melting temperature (e.g. at a given pressure), here termed "melting temperature modifying materials", the melting pressure (e.g., at a given temperature), here termed melting pressure modifying materials. Modifying materials may increase or decrease the melting temperature and/or pressure. Examples of melting point modifying materials include, but are not limited to metals which may, for instance, form an alloy with the EDECCI. An example of a metallic temperature modifying material is copper. Other temperature modifying materials are possible according to the invention. Modifying materials may include materials which modify the distribution of components in the reactive material. Said materials are here termed "uniformity modifying materials". For instance, the various components of the reactive material may be, essentially, well mixed without the inclusion of said uniformity modifying material, but then segregate or tend to segregate upon the addition of said uniformity modifying material. The uniformity modifying material may be, for instance, temperature or pressure sensitive, meaning that it may segregate or tend to segregate above or below a certain temperature. A uniformity modifying material may be, for instance a saturating material. A saturating material may become saturated, for instance as the temperature is increased or decreased, in the reactive material and, thus, being no longer soluble or evenly mixed, then may precipitate out of or tend to precipitate out of the other components of the reactive material. An example of a saturation modifying material is lithium. Other saturation modifying materials are possible according to the invention. A temperature modifying material may also be a uniformity modifying material. Modifying materials may be fracture-inducing materials. A fracture inducing material may induce fractures within the material. A fracture-inducing material may also be in contact or in close proximity to the reactive material and so may not, technically, be a modifying material as it may be external to the reactive material. A fracture-inducing material may induce fractures by any means. An example means is by generating high stresses within the material. Such stresses may be rapidly released by a fracture. Stresses may be generated by, for instance, solidification, for instance during cooling. Stresses may be amplified by, for instance, lattice mismatching between material, for instance, reactive material, components. A saturation modifying material or uniformity modifying material may also cause voltage differences within the reactive material. In the case of a Li-Ni alloy, there may be voltage differences between the Ni-rich and Li-rich phases because of the different Fermi levels in these metallic phases.

It has been surprisingly found that close proximity inner-most electron shell bonding between an EDECCI nucleus and a nucleus of a low atomic weight material (LAWM) may be efficiently generated by at least three different methods:
- By the production of fractures in the solid phase of the reactive material. During the fracturing process, the reactive material is far from thermodynamic equilibrium. Without intending to be bound by theory, fractures are thought to be capable of generating energetic ions and/or energetic electrons near the fracture. Said ions and/or electronics may have sufficient energy for the establishment of metastable inner-most electron shell bonding. In certain compositions of the reactive material, temperature cycling has been found to be an effective method for the production of fractures. It is understood that the temperature cycling may generate mechanical stresses that, when released, may generate fractures. These mechanical stresses may be driven by the temperature gradient between the solid-liquid phases, which may also cause spatial concentration gradient of some alloy constituents. Spatial concentration gradients of alkali metal alloy constituents may be particularly capable of generating mechanical stresses.
- By the solid-liquid phase changes of the reactive material. During the partial melting process, the reactive material undergoing a phase change may be far from thermodynamic equilibrium if the solid phase and molten phase have different Fermi energy levels. For example, in the case of a Ni-Li alloy, the solid state tends to be Ni-rich, while the molten state tends to be Li-rich. The difference in Fermi energy levels between the Ni-rich and Li-rich phases can be as high as 8 V This voltage may accelerate ions and electrons during phase changes. Without intending to be bound by theory, under the condition of different Fermi energy levels, partial melting events are thought to be capable of generating energetic ions and/or energetic electrons at the solid-liquid interface which may have the sufficient energy for the establishment of metastable inner-most electron shell bonding. In certain compositions of the reactive material, temperature cycling has been found to be an effective method for the production of these solid-liquid phase changes.
- By high-frequency (i.e. THz range) vibrations, which are increasing the probability of quantum tunneling into the metastable close proximity bonding. Quantum tunneling allows the formation of metastable inner-most electron shell bonding at a certain probability. This probability is approximately proportional to the frequency of vibration between the neighboring ions, which may be forming the inner-most electron shell bonding. It has been surprisingly found that, in the case of THz range vibration of the reactive material containing EDECCI and LAWM, the probability of close proximity bond formation between EDECCI and LAWM is high enough for observable production of such nuclei pairs.

Other methods to achieve close proximity inner-most electron shell bonding between an EDECCI nucleus and a nucleus of a low atomic weight material (LAWM) are possible according to the invention.

Consequent to the above discoveries, temperature cycling has been found to be a particularly effective method for the production of close proximity inner-most electron shell bonding between EDECCI nuclei and LAWM nuclei. Preferred LAWM includes lithium, helium, hydrogen or deuterium or any mixture thereof.

Upon the transformation of the transmuted EDECCI's nuclear energy into the kinetic energy of said close-proximity nuclei, they may rapidly separate according to the laws of energy and momentum conservation. Since the LAWM nucleus is much lighter then the EDECCI nucleus, it will gain most of the kinetic energy. It has been discovered that some of these LAWM materials are able to undergo secondary exothermic reactions upon colliding with other nuclei of the reactive material, while having kinetic energy in the MeV to 10 keV range. These discovered secondary reactions are thought to be mainly of neutron exchange type, wherein a neutron is transferred from the LAWM to certain other nuclei of the reactive material. The most notable examples of such exothermic secondary reactions are:
⁷Li + ⁶¹Ni → ⁶Li + ⁶²Ni + 1.7 MeV
⁷Li + ⁵⁸Ni → ⁶Li + ⁵⁹Ni + 0.1 MeV
²H + ⁶¹Ni → ¹H + ⁶²Ni + 0.3 MeV

Altogether, secondary reactions initiated by energetic LAWM may add significant additional exothermic energy to the overall reaction process.

An example of an EDECCI, according to the invention is nickel (Ni). Said Ni EDECCI is capable of transmuting to Fe upon double electron capture. The exothermic energy of said double electron capture is approximately 2 MeV Other EDECCIs and other exothermic energies are possible according to the invention.

A "secondary nuclear reaction" is here defined as a nuclear reaction involving at least one of the energetic reaction products which have been kinetically energized by the double electron capture reaction.

If both the EDECCI and the other materials comprising the reactive material are metals, the reactive material may be termed a reactive alloy.

A "string reaction" is here defined as a sequence of exothermic double electron capture reactions (transmutation reactions) where one or more EDECCI nuclei are excited by the capture of one or more electrons, at least one of which is energized by energy absorption from one or more already transmuted EDECCI nuclei.

A "reaction chamber" is here defined as a chamber or vessel in which reactive material resides and in which the reaction takes place. A reaction chamber may be closed or open.

### REFERENCES

[1] https://doi.ore/10.1016/j.physleta.2014.09.024
[2] https://doi.org/10.1016/j.rinp.2014.10.002

### BRIEF DESCRIPTION OF DRAWINGS

Fig 1. View of the damaged reactor with breached container (top) and just the melted part of the reactor (bottom).
Fig 2. The remainders of the container and sample material inside.
Fig 3. The temperature log of the experiment, with the overlaid line showing heater voltage (arbitrary scale).
Fig 4. Temperature curve around the reaction event, the shading highlights the stages of pre-reaction melting and post-reaction events.
Fig 5. The container at the end of the experiment, with the view of the frozen metal geyser.
Fig 6. The cross-section view of the opened container, showing non-oxidized metallic surfaces along its interior.
Fig 7. The temperature vs. time plot at various reactor temperatures. The shading highlights phase changes. Each plot shows a 6-8 minute time segment. The overlaid upper curve shows the control voltage of the heater unit.
Fig 8. Temperature vs. time plot at 1310 °C (8 minutes segment).
Fig 9. Post-test views of an apparently intact (slightly bloated) container and a completely breached container.
Fig 10. Temperature log of the temperature cycling process. The horizontal axis indicates the experiment time (seconds).
Fig 11. Temperature jump events during the temperature cycling process. The horizontal axis indicates the experiment time (seconds).
Fig 12. Post-heating temperature charts, showing 30 s evolution after heating stopped. All charts have been normalized to the same starting point for better comparison.
Fig 13. Comparison of cycle 4 temperature charts for calibration vs. live run, showing 14 sec cooling segment after reaching maximum temperature. Both charts have been normalized to the same ending point for better comparison.
Fig 14. Comparison of temperature rise times during calibration (circles) versus live test run (squares).
Fig 15. Post-experiment view of the downstream ceramic tube surface.
Fig 16. Post-experiment view of the reaction materials.
Fig 17. Schematic view of the stacked thermophotovoltaic electricity generator.
Fig 18. Schematic view of the stacked thermophotovoltaic electricity generator with temperature cycling control.
Fig 19. Schematic view of the stacked thermophotovoltaic electricity generator with heat reservoir based temperature cycling control.
Fig 20. Temperature evolution of the thermocouple during calibration (gray) and live experiment run (black).
Fig 21. Schematic diagram of an embodiment of the method according to the invention.
Fig 22. Schematic drawing of an embodiment of the device according to the invention.

### DETAILED DESCRIPTION OF THE INVENTION

An invention comprising a method and an apparatus for energy production comprising heating a three or more element metallic alloy to initiate and/or sustain an exothermic reaction between at least two of the metallic elements in the alloy is disclosed. According to one embodiment of the invention, the elements of the metallic alloy may comprise an alkali metal, an alkali earth metal, a transition metal, a post-transition metal, a lanthanide and/or an actinide.

According to a preferred embodiment, it has been surprisingly discovered, that an exothermic reaction can be initiated in a metallic alloy. Moreover, the reaction has been surprisingly found to spontaneously initiate when the alloy is in a partially molten state, i.e. it contains both liquid and solid phases. It has been furthermore surprisingly discovered that such an exothermic reaction may be repeatedly re-initiated and/or sustained via a temperature cycling program, which has its lower temperature threshold in the vicinity where the alloy fully solidifies and has its upper temperature threshold in the vicinity where the alloy fully melts, here termed the phase change temperature range of the metallic alloy. The periodicity of temperature cycling is preferably short enough for the exothermic reaction to be ongoing for a large fraction of time.

In one preferred embodiment, the alloy contains Li and Ni elements, though other metals are possible according to the invention. The observed exothermic reaction has been surprisingly observed to last for several minutes at a constant temperature. Additional exemplary alloy formulations are described.

As a preferred embodiment, a fuel consisting of 3 w% Li, 43.5 w% Ni, and 53.5 w% Cu has been used, though other metals and ratios are possible according to the invention. The lowest temperature at which the exothermic reaction has been observed with this alloy is 1192 °C, and the highest temperature at which the exothermic reaction has been observed with this alloy is 1290 °C. This temperature range corresponds well to the known partial melting temperature range of the 45 w% Ni and 55 w% Cu alloy known as Constantan. With a temperature cycling program having a 5-minute periodicity, and 1200 / 1300 °C temperature thresholds, we obtained an average power density of 8 W/g and a peak power density of nearly 100 W/g with respect to the alloy mass.

Employing a temperature cycling program having 1240 / 1300 °C temperature thresholds, we obtained an average power density of 30 W/g.

It has been discovered that the exothermic reaction spontaneously initiated upon reaching the partial melting temperature of the alloy. Moreover, it has been observed that the reaction terminated when the temperature dropped below 1192 °C in the abovesaid alloy, and when the alloy became completely molten at about 1300 °C. It was discovered that maintaining the alloy at any constant temperature in the partially molten state leads to an exothermic reaction lifetime to about 2-5 minutes. With sufficient control of reactor conditions, it is expected to be able to extend the reaction lifetime significantly to hours, days or even months and years.

A radiation detector has shown no signs of radioactivity during or after the exothermic reaction. However, surprisingly, radio-frequency (RF) signal bursts have been detected during the exothermic reaction. The post-reaction fuel contents have retained their metallic appearance. Surprisingly, some de-alloying of Cu has been observed in the abovesaid preferred alloy, indicating a significantly elevated local temperature in certain parts of the alloy, as a consequence of the discovered exothermic reaction.

Since the herein disclosed energy generating method requires only a metallic alloy as input, does not generate harmful output waste, is easily controllable, and is radioactivity free, it qualifies as an economical, clean and sustainable energy production technology.

As further elucidation of the discovered reaction triggers, we performed the following set of experiments:
- An alloy of 3 w% Li, 43.5 w% Ni, and 53.5 w% Cu has been kept in a fully molten state at 1310 °C. No sign of exothermic reaction has been observed.
- An alloy of 16 w% Li and 84 w% Ni has been kept in a fully solid state at 1200 °C, overlapping the abovesaid reactive temperature region of the other alloy. No sign of exothermic reaction has been observed.
- An alloy of 10 w% Li and 90 w% Ni has been obtained in a fully molten state at 1500 °C, by dropping Li pieces into molten Ni under an inert atmosphere. No sign of exothermic reaction has been observed.
- An alloy of 2 w% Li, 90 w% Ni, and 8 w% Al has been gradually heated. An exothermic reaction has been observed at 1350 °C temperature, where this alloy has started to melt.

Without intending to be bound by theory, we are drawn to the surprising conclusion that the exothermic reaction takes place at solid-molten interface regions of a suitable metallic alloy. It appears that, as the reaction fuels are gradually depleted in such regions, temperature cycling may be used to keep the reaction ongoing by regenerating fresh solid-molten interfaces.

Without intending to be bound by theory, our experiments indicate that preferred alloy compositions may meet the following requirements:
- A preferred alloy constituent is Li, which takes part in the exothermic reaction.
- A preferred alloy component is Ni and/or Ca, which take part in the exothermic reaction. Ni is the more preferred and more practical alloy component choice.
- A preferred alloy component is any of Ni, Pd, Pt, Gd, or any combination thereof, which may catalyze the abovesaid exothermic reaction. Without intending to be bound by theory, the high effective electron mass of these metals is believed to play a catalytic role. Ni is the more preferred and more practical alloy component choice.
- As optional alloy component, any other metal or combination of metals may be added according to the invention and may serve to modify a critical property of the alloy, for instance, the alloy's melting point. Cu is particularly preferred, as its use creates a wide temperature range of partially molten alloy, resulting in improved controllability of the exothermic reaction. Al has also been found to aid in the reaction.

Upon more detailed investigation of the reaction mechanism, it has been discovered that the exothermic reaction consists of a series of localized run-away exothermic reactions, forming a series of small `hot spots'. It has been discovered that the overall reaction consists of two steps:
1. A triggering step which generates an initial exothermic reaction in one or more nuclei. Surprisingly, it was found that such triggering may be achieved for example by maintaining a temperature gradient close of the melting point of the employed alloy's solid phase, which results in a movement of crystal grain boundaries within the solid phase or in solid-to-liquid phase change. According to the invention, the string reaction may also be initiated or triggered by any number of means. The means may either directly generate initiating double electron capture events, or produce high-energy electrons, ions of double electron capture capable isotope, or other materials in order to trigger the string reaction upon impact.
2. A run-away string reaction step, which rapidly terminates itself. This process takes place in the liquid phase, and is triggered by an initiating reaction. Such string reaction is feasible when the alloy contains some alkali metal or alkali-earth metal constituent, preferably lithium. The use of any other alkali metal or alkali-earth metal constituent is possible according to the invention.

It has been surprisingly discovered, that the abovesaid exothermic reaction is feasible when the employed alloy contains one or more isotope capable of exothermically undergoing double electron capture. Nickel is an exemplary alloy constituent, since it contains 68% mass ratio of ⁵⁸Ni, which is capable of exothermically undergoing double electron capture. Upon such double electron capture, ⁵⁸Ni is transmuted into ⁵⁸Fe, liberating approximately 2 MeV energy. Without intending to be bound by theory, the nuclear double electron capture reaction is thought to be the energy source behind the discovered exothermic reaction. Without intending to be bound by theory, the alkali metal or alkali-earth metal alloy constituent is thought to produce to such electron configuration in the molten state, which is capable of carrying energy away from the excited nuclei upon such transmutation events, thereby making localized string reactions possible.

The general class of alloys capable of producing exothermic reaction according to the invention is summarized as follows:
- One alloy constituent is such element, which contains one or more isotopes capable of exothermically undergoing double electron capture reaction. Nickel is a preferred such alloy constituent.
- One alloy constituent is such element, whose electron configuration in the molten state is capable of carrying energy away from the excited nuclei. Lithium is a preferred such alloy constituent.
- Other optional alloy constituents may be employed for controlling the melting temperature of the alloy, thereby adjusting its operational temperature range.

Any alloy composition conforming to the above listed parameters is possible according to the invention. Moreover, it is preferable that the alloy initiates an exothermic reaction in the partially molten alloy state. Though, in a preferred embodiment of the invention, the metallic alloy elements are lithium, nickel and copper (Li, Ni and Cu), other metallic alloy elements are possible according to the invention and their ratios may vary according to the invention to achieve desired results.

Considering the exemplary alloy consisting of 3 w% Li, 43.5 w% Ni, and 53.5 w% Cu, its theoretical energy content according to the double electron capture reaction is approximately 1 GJ/g. When operated at the achieved 30 W/g reaction rate, such fuel may supply energy up to one year.

According to one embodiment of the invention, the mass ratio of lithium is between 0.01% to 50%, the mass ratio of copper is between 10 and 95% and the mass ratio of nickel is between 10 and 95%. In an embodiment, the mass ratio of lithium is between 0.1% to 40%, the mass ratio of copper is between 20 and 75% and the mass ratio of nickel is between 20% and 75%. In an embodiment, the mass ratio of lithium is between 1% to 30%, the mass ratio of copper is between 25% and 65% and the mass ratio of nickel is between 30% and 65%. In an embodiment, the mass ratio of lithium is between 2% to 25%, the mass ratio of copper is between 30% and 55% and the mass ratio of nickel is between 30% and 45%. In an embodiment, the mass ratio of lithium is between 2.9% to 22.1%, the mass ratio of copper is between 32.4 and 53.4% and the mass ratio of nickel is between 34.6 and 43.7%. Other ratios are possible according to the invention.

According to the invention, heating of the alloy may be achieved by any means known in the art. The heating may be external (i.e. supplied to all or part of the metallic alloy from outside the reaction process within and/or between the elements of the metallic alloy), or internal or self-heating (i.e. supplied by the reaction process with and/or between the elements of the metallic alloy).

According to the invention, all or part of the heating may be supplied externally to the metallic alloy by external heating. According to one preferred embodiment, the heating source may be a furnace heated resistively by the supply of an electric current. Other heating sources and means are possible according to the invention. Self-heating, cooling and/or external heating may be used, in combination, or separately, to control the temperature and/or temperature range of the metallic alloy.

According to the invention, all or part of the heating may be supplied by self-heating (i.e. by all or part of the metallic alloy itself). In a preferred embodiment of the invention, most of the heating - except for the initial starting heat - is supplied by self-heating. In a preferred embodiment of the invention, the self-heating is supplied by chemical and/or nuclear reaction. In such a case, the reaction may be initiated and/or maintained and/or controlled, at least in part, by self-heating. In such a case, the reaction may be terminated and/or maintained and/or controlled, at least in part, by cooling. In one embodiment, the heating component is in standby mode when the reactor temperature is above the desired minimum and is reactivated in case the reactor temperature drops below the desired minimum temperature threshold. The main challenge of self-heating based operation is to implement the above disclosed temperature cycling program. According to the invention, this temperature cycling may be achieved by a means of variable cooling rate. The cooling rate is increased near the upper temperature cycling threshold, and decreased near the lower temperature cycling threshold. Variable reactor cooling may be achieved by any means known in the art, such as controlled coolant flow or controlled thermal radiative power. In the later case, the temperature may be controlled by balancing the radiated heat and the reflected and reabsorbed heat.

The reaction may be maintained and/or controlled by heating and/or cooling to within a target temperature range. The target temperature range may be bounded within 100 °C of each the fully solid and fully molten states of the employed metallic alloy. The target temperature range may be within 50 °C of each the fully solid and/or fully molten states of the employed metallic alloy. The target temperature range may be within 20 °C of each the fully solid and/or fully molten states of the employed metallic alloy. The target temperature range may be within 10 °C of each the fully solid and/or fully molten states of the employed metallic alloy. The target temperature range may be within 5 °C of each the fully solid and/or fully molten states of the employed metallic alloy. Other target temperature ranges are possible according to the invention.

In the Li-Ni-Cu embodiment of the invention, the target temperature range is preferably between 450 °C and 2100 °C and more preferably between 850 °C and 1700 °C and more preferably between 950 °C and 1500 °C and more preferably between 1050 °C and 1400 °C and more preferably between 1150 °C and 1350 °C and most preferably between 1180 °C and 1300 °C. Other target temperature ranges are possible according to the invention and may freely vary according to embodiment including the alloy pressure, density, metallic alloy elements and their ratios in the alloy. Other temperature ranges are possible to other embodiments according to the invention.

In one embodiment of the invention, the lower end of the target temperature range is maintained by external heating. In one embodiment of the invention, the upper end of the temperature range is maintained by external cooling. Such cooling may be by any means know in the art. In one embodiment of the invention, the cooling may be used to collect, store, transmit or convert energy as will be described later.

In one embodiment of the invention, the cycling time between the maximum and minimum of the target temperature range is between 1 second and 7200 seconds. In one embodiment, the cycling time is between 8 seconds and 900 seconds. In an embodiment, the cycling time is between 20 seconds and 300 seconds. The cycling time is here defined as the time to return to the initial temperature bound, be it high or low. Other cycling times are possible according to other embodiments of the invention.

According to the invention, the pressure at the metallic alloy surface may be below 1000 atm. According to the invention, the pressure at the metallic alloy surface may be below 100 atm. According to the invention, the pressure at the metallic alloy surface may be below 10 atm.

In one embodiment of the invention, the metallic alloy resides in a vessel. In one embodiment of the invention, the vessel is sealed and/or self-contained so that the contents of the vessel (e.g. metallic alloy and residual or otherwise surrounding gases) are not in direct contact with the atmosphere outside the vessel or are otherwise maintained in an atmosphere essentially chemically inert to the metallic elements of the alloy. According to the invention, a vacuum is considered an inert atmosphere. In one embodiment of the invention, the vessel is sealed and/or self-contained. This sealing and/or containment may be by welding, capping, encasing and/or otherwise enclosing. Any means of sealing and/or enclosing the vessel is possible according to the invention. The sealing is aiming to preserve the integrity of the internal environment and not allow external materials to contact the contents of the vessel. The vessel may be comprised of a reaction (e.g. oxidation) resistant material and/or a pressure resistant material. In one embodiment of the invention, the oxidant resistant and pressure resistant materials are one in the same. In one embodiment of the invention, the metallic alloy is first enclosed by a sealed pressure resistant vessel which is then enclosed by a sealed reaction resistant vessel. In this way, the combined vessel may be in contact with an oxidizing or otherwise reactive environment and/or the atmosphere surrounding the metallic alloy may be essentially chemically inert to the metallic elements of the alloy.

Any reaction resistant solid material which can protect the contents of the vessel from the environment and/or maintain an essentially inert atmosphere around the alloy are possible according to the invention, including but not limited to various grades of iron, steel, molybdenum, titanium and/or carbon based materials such as graphite. According to one preferred embodiment of the invention, the reaction resistant vessel material is APM alloy. Any pressure resistant solid material which can protect the contents of the vessel from the environment and/or maintain an essentially inert atmosphere around the alloy are possible according to the invention, including but not limited to various grades of iron, steel, molybdenum, titanium and/or carbon based materials such as graphite. According to one preferred embodiment of the invention, the pressure resistant vessel material is TZM alloy.

In a preferred embodiment of the invention, some or all of the heat/energy of reaction is collected. This heat/energy may be collected, for instance, by a heat or energy sink. In one embodiment of the invention, the heat or energy sink is a coolant flow. In an other embodiment of the invention, the heat or energy sink is a thermally radiative surface.

In one embodiment of the invention, the properties of the heat or energy sink are varied to maintain all or part of the metallic alloy within the target temperature range. According to the invention, the property of the heat or energy sink that is varied may be, for instance, the coolant heat conductivity, flow rate, flow pattern or direction, passage geometry, level of turbulence, pressure or pressure differential, temperature or temperature differential, viscosity, volume, mass, density, heat capacity, composition, structure, orientation, interface property, material radiative or reflective property or connectivity.

Collected heat or energy may be used to perform work, converted to another form of energy (e.g. electrical potential, phase change or chemical bonds), stored in an energy storage system, or used for direct heating. Other forms of energy and energy storage systems are possible according to the invention.

A complementary method and apparatus for electric energy production from heat is also herein disclosed which may be used together with the abovesaid thermal energy generator. The high operating temperature of the disclosed reactor is in the practical range for thermophotovoltaic energy conversion. Currently known thermophotovoltaic devices are capable of achieving not more than 25-30% heat-to-electricity conversion. Surprisingly, we have discovered a thermophotovoltaic type energy conversion technology, which is capable of achieving 40-50% heat-to-electricity conversion. Since thermophotovoltaic technology is well scalable in terms of implementation size, from household equipment size to power-plant size, this technology enables electricity production via the utilization of above disclosed energy generation at any practical physical scale. Furthermore, the thermophotovoltaic conversion technology which will be described in the following paragraphs facilitates a simple and energy-efficient implementation of temperature cycling, thereby meeting the operational requirements of the above disclosed energy generation technique. The energy generation and energy conversion technologies disclosed are thereby complements to each other, together allowing the construction of practical and cost-effective electricity generating equipment.

According to the invention, the conversion from heat energy to electric energy is performed by a stacked thermophotovoltaic arrangement, comprising the following sequential arrangement of vacuum-separated surfaces:
1. A hot surface of a heat source, e.g. a container housing an energy-generating metallic alloy, which is preferably coated with a frequency-selective thermal radiation emissive material. The aim of frequency selective emission is to match the frequency corresponding to the bandgap of the below described first stage photovoltaic surface as closely as possible.
2. Optionally, a highly reflective louver-structured metallic surface, which can be rotated `venetian blinds' style between perpendicular and parallel positions with respect to the other surfaces, may be used to control the rate of heat transfer in the system. In the parallel position, its inner side reflects most thermal emission back to the abovesaid thermal radiation emissive surface (hot surface or plate), while its outer side emits just a small amount of thermal radiation. In the perpendicular position, it allows thermal radiation to pass back and forth between the abovesaid thermal radiation emissive surface and belowsaid first stage photovoltaic surface. Intermediate positions control the radiation between the two extremes.
3. A first stage photovoltaic inner surface facing the hot plate, having a photoemissive light emitting diode (LED) outer surface on its back side. This photovoltaic surface produces the first stage electricity output. The photoemissive light emitting diode surface on its back side is preferably kept under forward voltage bias for emissivity optimization. The temperature of this layer may be determined by the forward biasing voltage, which is adjusted according to the overall system efficiency optimization.
4. A second stage photovoltaic surface facing the abovesaid forward-biased LED surface which produces the second stage electricity output. The bandgap of this photovoltaic surface preferably matches the LED bandgap as closely as possible for optimal efficiency. This surface may be actively cooled, e.g. by flowing a coolant at the back side, in order to keep the photovoltaic surface at an ideal operating temperature. Said coolant may be used to store or transport energy.

Further extension of this stack by even more stages of LED - photovoltaic surface pairs is possible according to the invention.

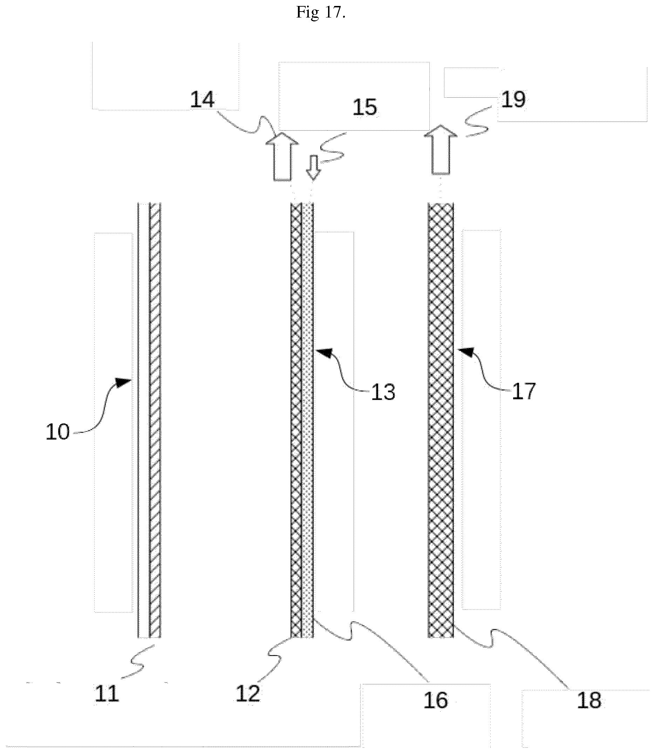

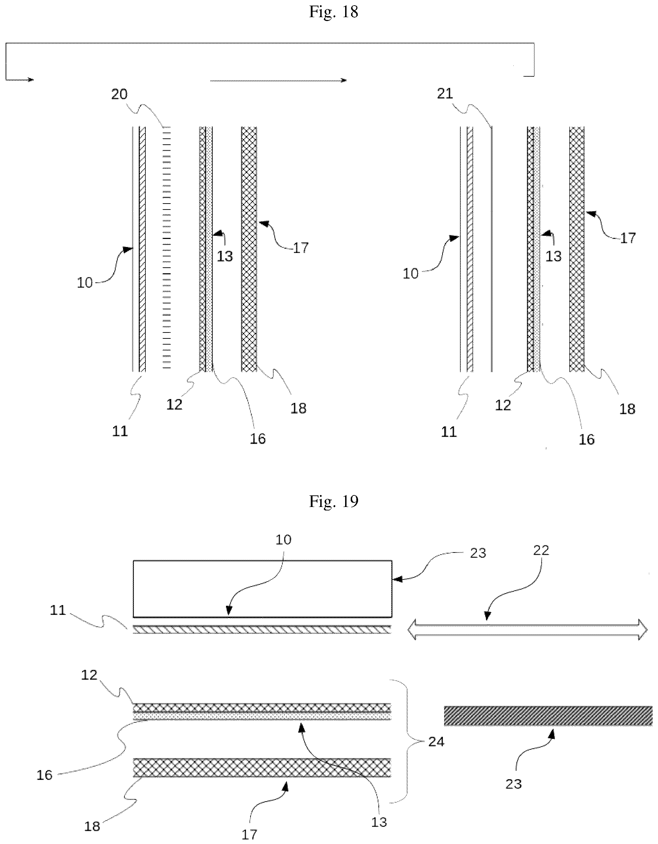

An illustration of the above described heat-to-electricity conversion structure is shown in Fig 17, and its operation with temperature cycling control is shown in Fig 18.

For figures 17, 18 and 19, the following notation applies:
10: Hot surface-heated by a heat source. 11: Surface coating for frequency-selective emissivity. 12: Infrared PV surface. 13: Intermediate temperature surface. 14: 1^{st} stage electric power output. 15: power feedback for LED forward biasing. 16: Infrared LED surface. generates, while a is input to infrared LED surface (16). 17: Cold surface - actively or passively cooled. 18: Infrared PV surface. 19: 2^{nd} stage electric power output. 20: reflective blinds rotate to allow thermal radiation to pass when temperature is high enough. 21 reflective blinds rotate to reflect thermal radiation when the temperature is low.

In Fig 17, hot surface (10), heated by a heat source, has a surface coating (11) for frequency-selective emission, preferably on the side opposite the heating source which faces intermediate temperature surface (13). Cold surface (17), actively or passively cooled, comprises another infrared PV surface (18), from which 2^{nd} stage electric power output (19) is generated. Situated between hot surface (10) and cold surface (17), intermediate temperature surface (13), comprising infrared PV surface (12) facing hot surface (10) and infrared LED surface (16) facing cold surface (17), generates 1^{st} stage electric power output (14), while a power feedback for LED forward biasing (15) is input to infrared LED surface (16). Intermediate temperature surface (13) and cold surface (17) together comprise the power stack.

The desired temperature cycling may be achieved through temperature-controlled adjustment of louver, e.g. of the `venetian blinds' style, comprising reflective metallic surfaces. When the reactor temperature has sufficiently risen, the louver blinds are opened to allow radiative heat transfer. A sufficiently powerful radiative heat transfer and/or the full melting of the enclosed alloy material initiates the temperature falling phase. When the reactor temperature has sufficiently fallen, the blinds are closed in order to minimize the radiative heat transfer and thereby allow the heat producing reaction to turn the temperature falling phase into a temperature rising phase. In a preferred embodiment used in combination with the described metal alloy energy production invention, the first stage of the electric energy conversion device may be in the vicinity of or in contact with the metallic alloy or the vessels containing the metallic alloy to perform the heat-to-electricity energy conversion. In this way, the electric energy conversion device may act as a heat sink and/or temperature controller for the metallic alloy energy generator. The relative amount of employed metal alloy with respect to the size of photovoltaic surfaces may be adjusted such that the equipment becomes capable of self-heating during the continuous temperature cycling mode, preferably having a temperature cycle periodicity between 1 minute and 5 minutes. Other cycling times are possible according to the invention.

Fig 18 shows a schematic of an embodiment of the stacked thermophotovoltaic electricity generator of Fig 17 with the addition of louvre-based temperature cycling control where, between hot surface (10) with a surface coating (11) for frequency-selective emission on the side opposite the heating source, and intermediate temperature surface (13), comprising infrared PV surface (12) and infrared LED surface (16), reflective blinds (20, 21) are situated, which rotate open to allow thermal radiation to pass when the temperature is high enough and rotate closed to reflect thermal radiation when the temperature is low enough.

The desired temperature cycling may also be achieved through temperature-controlled or time-controlled displacement of the reactor container between a high thermal mass hot environment for the heating phase and lower temperature environment for the cooling phase. When the reactor temperature has sufficiently risen, the container is moved into the lower temperature environment to allow radiative heat transfer. A sufficiently powerful radiative heat transfer and/or the full melting of the enclosed alloy material initiates the temperature falling phase. When the reactor temperature has sufficiently fallen, the container is moved into the high thermal mass hot environment for initiating a temperature rising phase. In a preferred embodiment used in combination with the described metal alloy energy production invention, during the cooling phase the first stage of the electric energy conversion device may be in the vicinity of or in contact with the metallic alloy or the vessels containing the metallic alloy to perform the heat-to-electricity energy conversion. In this way, the electric energy conversion device may act as a heat sink and/or temperature controller for the metallic alloy energy generator. In order to maintain a nearly constant temperature of the hot environment, the thermal radiation emitted during the heating stage from the employed metal alloy must be capable of counter-balancing the thermal losses of the hot environment, averaged over the whole cycle period. The periodic container displacement preferably corresponds to a periodicity between 1 minute and 5 minutes. Other cycling times are possible according to the invention. Other methods of temperature cycling are possible according to the invention.

Fig 19 shows a schematic of an embodiment of the stacked thermophotovoltaic electricity generator with reservoir-based temperature cycling control of Fig 17 where temperature cycling is accomplished by periodically moving a fuel container (23) in and out of the power stack (24) of the thermophotovoltaic electricity generator. The fuel container may contain reactive material undergoing net exothermic reaction or be otherwise be internally heated. The container may have hot surface (10) with an external surface coating (11) for frequency-selective emission on external side of the hot surface of the fuel container. The fuel container may be moved in and out of the stack as indicated by the arrow (22) so as to move to face the intermediate temperature surface (13), comprising infrared PV surface (12) and infrared LED surface (16), or to face the hot surface of a high thermal mass component (23).

Temperature control of the first stage may be accomplished by controlling the forward biasing voltage. The first stage temperature is preferably set to the value maximizing the overall heat-to-electricity conversion efficiency. For a given choice of surface materials, the overall heat-to-electricity conversion efficiency maximization is mainly a two-dimensional optimization over the following two parameters:
- The choice of semiconductor thickness of the first stage photovoltaic inner surface. Since this surface's optimal temperature is in the intermediate temperature range of 400 - 700 °C, efficiency loss due to electron-hole recombination is significant. Such loss may be mitigated by reducing the semiconductor thickness, which in turn reduces the probability of capturing incoming photons by the semiconductor before their reflection. Since reflected photons are directed back at the hot surface, reflected energy is not lost. Therefore a thinner semiconductor layer causes more back-and-forth radiation passes for generating electron-hole pairs, which reduces the first-stage efficiency by reducing the relative power of captured above-bandgap vs. below-bandgap emissions.
- The choice of the forward biasing voltage, which is the main controlling factor of the the first stage photovoltaic surface temperature. A hotter surface causes the disadvantage of more electron-hole recombination losses at the first stage photovoltaic surface, while also causes the advantage of more thermally-assisted LED emissions at the outside facing LED surface.

For any given choice of the equipment materials, the best system-level conversion efficiency may be found through the optimal adjustment of the above two main equipment parameters.

A preferred choice of materials for the construction of the above disclosed energy generating equipment is to employ NiO-doped MgO for the frequency-selectively emissive hot surface, and to employ GaSb based photovoltaic and LED surfaces. With such material choices, a system-level optimization study indicates the feasibility of heat-to-electricity conversion efficiency in the 40-50% range, after accounting for the forward biasing power feedback. Other materials are possible according to the invention.

### EXAMPLES

In examples 1-6 below, the precursor metals (Li, Ni and, where appropriate, Cu or Al) have been placed in a metallic container made of APM material (m.p. 1500 °C, good oxidation resistance), and welded shut to ensure airtight sealing and significant overpressure tolerance even at high temperatures. In example 7 below, the precursor metals (Li, Ni and, where appropriate, Cu or Al) have been placed in a metallic tube made of TZM material, which has been flooded by Argon flow. The employed furnace heated the sample from three directions, to achieve good temperature uniformity. The heating filaments were made of Kanthal wire (m.p. 1500 °C, high oxidation resistance). S-type and N-type thermocouples were used for temperature sensing. The heating was controlled by on/off timing in the first experiment. In subsequent experiments it was controlled by thyristor electronics to achieve more precise heating control. Pressure was not directly measured in the examples below, but it can be safely assumed that, in the case of the use of sealed vessels (examples 1-6), the pressure did not exceed 100 atm and was likely below 10 atm. In cases where the vessel was not sealed (example 7), the pressure was approximately 1 atm. Other pressures are possible according to the invention.

In example 8 below, the precursor metals (Li, Ni and Cu) have been placed in a metallic container made of TZM material (m.p. 2600 °C), and welded shut to ensure airtight sealing and very high temperature tolerance.

### Example 1: Solid-state Li-Ni alloying

0.5 g of Ni powder and 0.1 g Li were enclosed in the metallic container and held for approximately one hour at 1200 °C. There was no excess heat detected during the heat treatment. After cooling and opening the container, an air-stable alloyed material was found inside, with metallic appearance. All the powders fused into a single solid. No free Li metal was observed. In summary, this experiment demonstrated that Li alloys even up to 20 w% into Ni and diffuses well into the solid state metal.

### Example 2: High temperature Li-Ni-Cu alloy

2 g of Constantan wire (55% Cu + 45% Ni alloy) and 0.06 g Li (giving an overall mass distribution of 44% Cu, 36% Ni and 20% Li) were loaded into a metallic container, and sealed by welding.

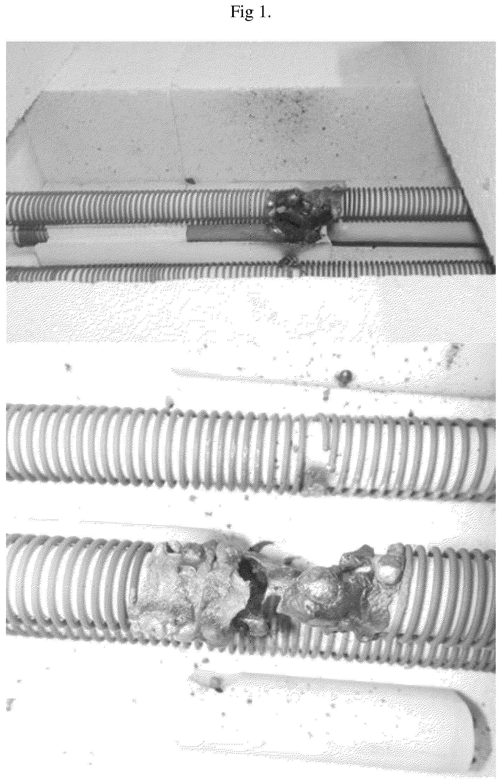

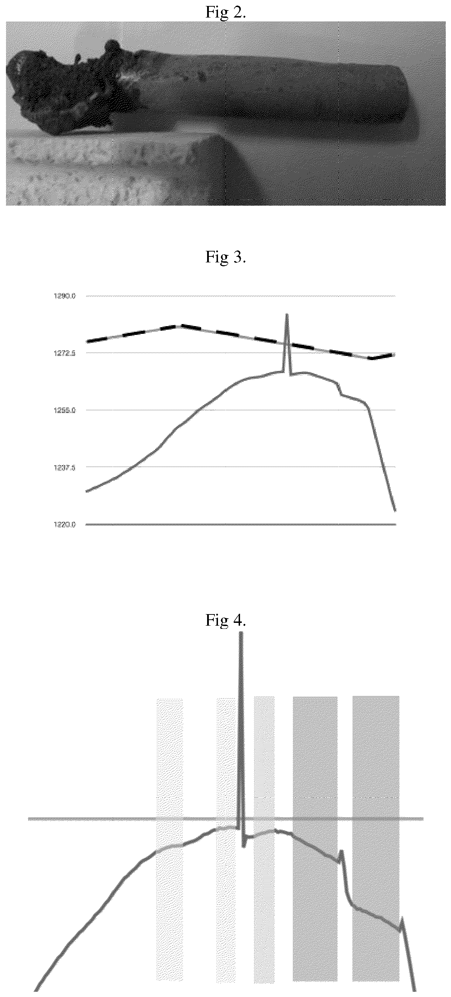

The sample was held for some time at 1200 °C, then the temperature was increased to 1300 °C. After 10-15 minutes at 1300 °C, an event occurred, which breached the metallic container wall (about 2 mm thickness at thinnest part) and melted the ceramic tube and heating wires above the sample. No detected sound accompanied this event. Figs 1 and 2 show the damaged reactor and resulting appearance of the sample.

It can be observed in Fig 2 that the container had bulged out along the drilled shaft (about 3/4 of the container length from the left), which indicates significant internal pressure. Since the previously described Li-Ni alloying experiment showed no similar signs of bulging or container failure, this effect is ascribed to the internal temperature rise above the Li boiling point via the exothermic reaction, where the evaporating Li causes the bulging and bursting of the APM containers. The APM walls are weakened at such high internal temperature.

The leftover contents had the appearance of Ni₃O₄ and CuO material. Such complete burning of the sample indicates a significantly elevated temperature at the time of the container wall failure. The damage to the reactor material indicates a spray of molten metal having a temperature well above 1500 °C. This damage cannot be explained by Li vapor burning. For instance, a sideways flying molten metal droplet melted the Kanthal wires, as can be seen on the upper tube in Fig 1. Also, the complete breaching of the APM wall is consistent with structural damage caused by very high internal temperature. A gamma-ray detector showed no signs of radioactivity in the resulting sample.

### Example 3: Instrumented observation of a single reaction event in the Li-Ni-Cu alloy

The molten Li-Ni-Cu alloy experiment has been repeated with an improved setup, employing more precise computer control and temperature logging, and thicker APM container walls. 2 g of Constantan wire and 0.06 g Li (giving an overall mass distribution of 42.3% Cu, 34.6% Ni and 22.1% Li) were again loaded into the metallic container. An N-type thermocouple was in direct contact with the container's outer wall for precise temperature logging.

Fig 3 shows the temperature logged during the experiment after reaching and exceeding 1200 °C. The vertical axis shows the temperature, and the horizontal axis shows the number of elapsed seconds from the start of heating. After reaching 1280 °C, the heating program has been set to maintain a temperature of 1250 °C. Approximately 1 kW of power was required to maintain this reactor temperature. An exothermic reaction apparently started at 1540 seconds, i.e. 9 minutes after exceeding 1200 °C.

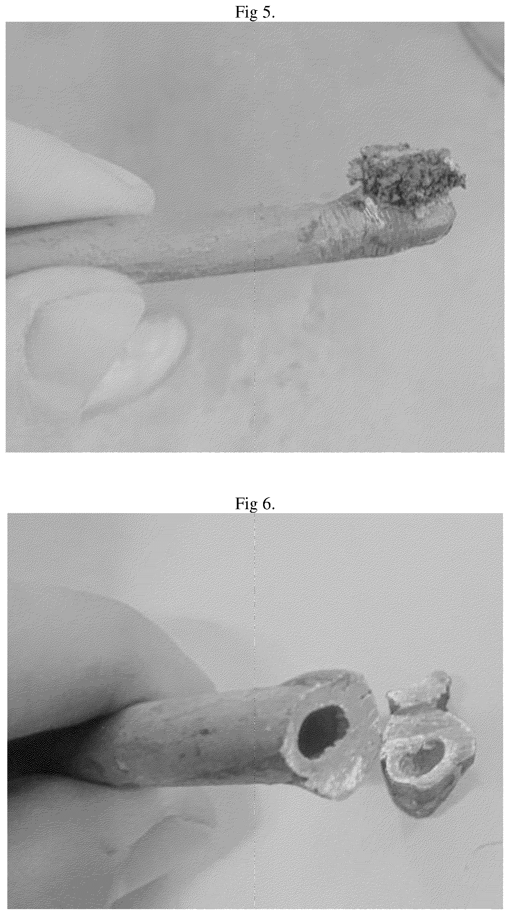

It can be seen in Fig 3 that the control electronics gradually reduced the heating power as the temperature rose above 1250 °C. At about 1550 sec time the thermocouple registers a sudden 20 °C spike in temperature. We believe that this apparent spike is a signature of an RF emission burst, which has been picked up by the thermocouple, and not an actual temperature change as the actual temperature would not be able to fall back so instantaneously to the preceding value. Concurrently, a `metal geyser' erupted from the container, once again melting through the heating filaments and ceramic tube above the container. Subsequently, all heating power was lost. As in the previous experiment, no sound was noticed accompanying this event. Fig 5 shows the resulting view of the container after cooling. As detailed below, this reaction onset seems to be directly preceded by some melting of the Li-Ni-Cu alloy.

Fig 4 shows details of the temperature history around the reaction event. The highlights on Fig 4 shows our interpretation of the signal data. The first two shading highlights melting events inside the container, characterized by temporary slowing of the temperature rise. The RF emission burst is a signature of the reaction event. Since the heating power is lost as a consequence of the reaction, the third shaded region indicates a temperature rise caused by the reaction itself. This interpretation is consistent with the spatial separation effect between the thermocouple (placed at the middle of the container) and the reaction hotspot (eruption is near the container end). A number of observations come together to indicate localized hot-spot nature of the reaction:
- it has been observed in the past experiment that the ejected molten metal's temperature is above 1500 °C, yet the thermocouple registers only a small temperature rise at the external container surface
- while the RF burst lasts for less than a second, the corresponding temperature rise is spread over several seconds and arrives with some delay, as the heat had to diffuse from the reaction site to the thermocouple to be detected
- the small amount of temperature rise registered at the top of container and at few cm distance from the molten metal burst location indicates a highly localized reaction hot-spot

The RF burst shows the instantaneous timing of the reaction; there is a small subsequent local cooling due to lost heating power, followed by a gradual temperature rise from the propagated reaction heat, and finally followed by a cooling phase. In the cooling phase the slower cooling shaded regions indicate the freezing of the container content. Signatures of RF bursts can be seen at the edge of the phase change regions, indicating minor follow-on reactions.

Altogether, the above observations indicate that the observed reaction is of a localized run-away reaction type. To confirm this hypothesis, in subsequent experiments we expect to see RF bursts of varying magnitude and temperature jumps of various magnitude/steepness. The spread of these quantities is expected to vary with the reaction-sensor distance and with the hot-spot reaction energy.

After cooling, the container was sawed open. Its cross section is shown in Fig 6. The `metal geyser' has apparently only moved materials out, without any resulting hole in the container, i.e. no air has entered back into the container. Consequently, Fig 6 shows metallic surfaces across the container's interior. This indicates that the exothermic reaction has indeed happened within the Li-Ni-Cu alloy. The melting of the ceramic tube and heating wires indicates that the internal reaction temperature has been well above 1500 °C at certain spots.

We observed that a reddish shade appears at some spotty locations of the inner surface, while the bulk of the reaction material remains metallic gray. This indicates a Copper accumulation on the metal surface, which might be caused by high temperature de-alloying. The spotty concentration of Copper also indicates very localized hot-spot type exothermic reaction. A gamma-ray detector showed no signs of radioactivity in the resulting sample.

### Example 4: Exploring the effect of phase change events

A Li-Ni-Cu alloy experiment was carried out with the following setup: the welded APM container was embedded into an approximately 0.5 cm thick ceramic encasement to prevent the spilling of bursting metal and to slow the thermal heating/cooling of the sample inside. 4 g of Constantan wire and 0.12 g Li (giving an overall mass distribution of 53.4% Cu, 43.7% Ni and 2.9% Li) were loaded into the metallic container. An N-type thermocouple was placed in direct contact with the ceramic encasement.

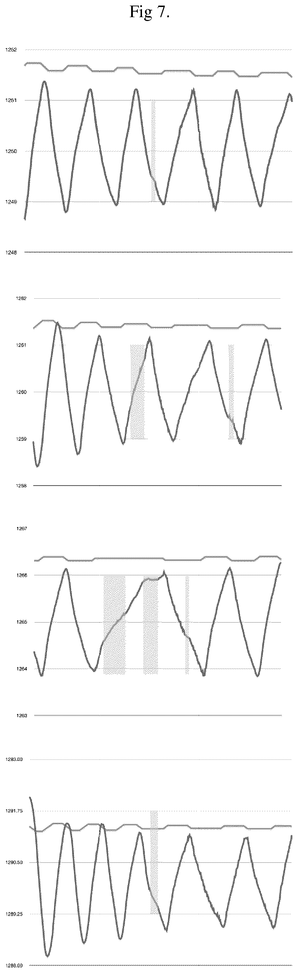

The temperature was raised in a stepwise fashion to different target temperatures, and at each target temperature, cycled ± 1 °C around the target. This methodology allows precise detection of phase changes and RF noise. Fig 7 shows the observed temperature plots.

The normal 'eventless' operation would be a smooth temperature cycling curve within the ±1 °C target tolerance limits. Every chart of Fig 7 shows the time segment just after reaching the new target temperature from the previous lower value. At every tested temperature, the temperature plot is initially a smooth cycle, then, after phase-change events, it becomes noisy for some minutes, and subsequently becomes smooth again. Based on the previous experiment, the observed noise is interpreted as the reaction's RF noise signature. The noise amplitude is smaller in this test than in the previous one, which is in line with the thermocouple being further away from the sample due to the ceramic encasement. This observed pattern supports our previous assumption that the reaction takes place at the solid metal surface; i.e. the reaction spontaneously initiates whenever a fresh new solid region is generated. It also points to the transient or self-limiting nature of the observed phenomenon; the reaction appears to last for only 2-3 minutes in each case.

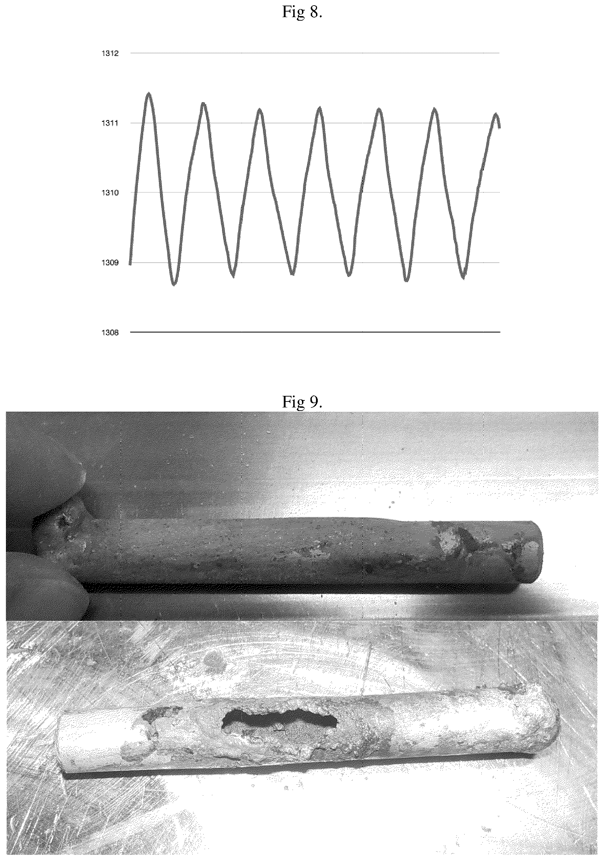

The intensity of the observed events does not seem to depend on the temperature. Fig 8 shows the temperature plot at 1310 °C, which is essentially eventless. At this temperature the Li-Ni-Cu alloy is assumed to be completely molten. This observation supports our hypothesis that the reaction takes place in the solid phase and not in the molten phase.

After the conclusion of the experiment, it was noticed that some metal had erupted from the container during the experiment, and flowed along the inner surface of the ceramic layer. The ceramic surface along the metal flow became shiny, indicating its local melting, which requires a higher than 1500 °C temperature. The inside content of the APM container appears to have remained unexposed to air, as in the previous test.

### Example 5: Reaction surface cycling and detection of reaction heat events

Since the observed reaction appears to terminate after a few minutes at a given temperature and since it appears to be triggered by a phase change, the question arises as to whether a stable reaction can be achieved through temperature cycling. The investigation of such temperature cycling was the aim of this test. A further aim was to collect more heat signature data from the burst reaction events.

This experiment has been carried out with the following setup: nine welded APM containers were embedded into an approximately 0.5 cm thick porcelain encasement. 2 g of Constantan wire and 0.06 g Li (giving an overall mass distribution of 53.4% Cu, 43.7% Ni and 2.9% Li) were loaded into each metallic container. An N-type thermocouple was placed in the middle of the container cluster. The main purpose of the porcelain encasement in this improved setup was to ensure a uniform temperature of the containers. Since the thermocouple is embedded within this porcelain encasement, the measured temperature values in this setup correspond precisely to the container temperature at its given location.

After the experiment, some containers have remained apparently un-breached while others have breached. Fig 9 shows post-test views of some containers. In line with previous test observations, a bloating of the intact container can be observed and a very dramatic damage on the breached container is observed. As the temperature control stayed below the Li boiling point throughout this experiment, and far below the APM melting point, this extensive container damage is an indication of the highly exothermic runaway nature of the observed reaction.

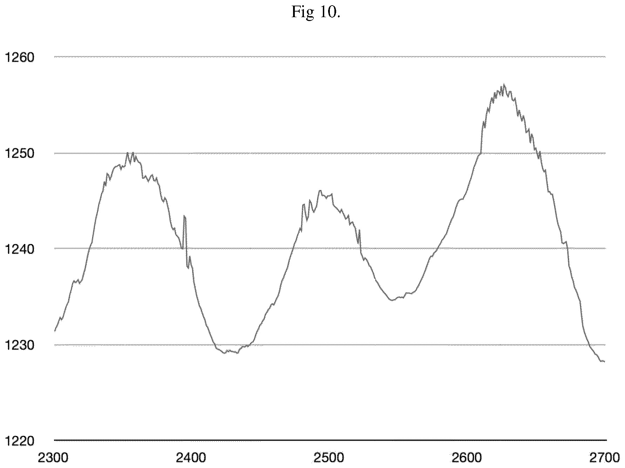

During this experiment the reactor temperature was cycled ±10 °C and ±20 °C around the target temperature. Low level RF noise was persistent during this cycling experiment, demonstrating the feasibility of extending the reaction lifetime. Fig 10 shows the temperature plot during one part of the temperature cycling process. The RF noise is seen to become periodically weaker and stronger during the cycling. This data confirms the few minute self-limiting reaction events, which were similarly observed in the previous experiment, and gives further evidence to the idea that the reaction takes place in the solid alloy or at its surface. Based on this data, it is proposed that the reaction can be nearly continuous when temperature cycling has periodicity on the order of minutes. With slower temperature cycling periodicity, e.g. on the order of an hour, the reaction would be expected to persist for only a small fraction of the time.

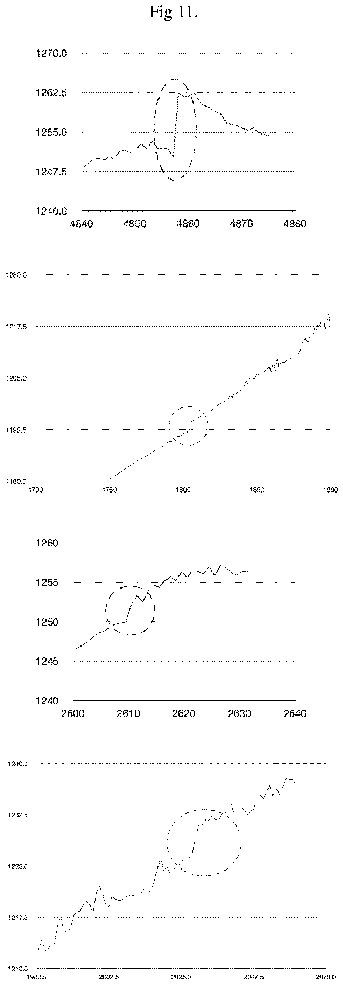

Direct reaction heat events are shown in Fig 11. As expected, all events show an abrupt temperature jump. The strongest one is in the first example, showing a 10 °C jump followed by cooling towards the preceding temperature. This data indicates the reaction takes place through run-away events in strongly localized hot-spots.

The second example in Fig 11 shows that the initial reaction heat event is detected already slightly below 1200 °C, when there is no molten phase yet, indicating a minimum temperature for this reaction in the solid or at the solid alloy surface.

The previously noted Copper accumulation is again clearly seen on some post-reaction surfaces. As the Copper concentration grows, the surface takes on a yellowish color, and then becomes Copper-red in the spots where the Copper is highly concentrated.

### Example 6: High temperature Li-Ni-Al alloy

2 g of metal wires having an overall mass distribution of 8% Al, 90% Ni and 2% Li were loaded into a metallic container, and sealed by welding.

The temperature was gradually increased to 1300 °C, then the sample was held for some time at 1300 °C. No signs of exothermic reaction have been noticed during this procedure.

Then the temperature was gradually increased to 1350 °C. After about one minute at 1350 °C, RF signatures of the exothermic reaction have been detected, lasting for approximately 5 minutes.

### Example 7: Open vessel of Li-Ni-Cu alloy in an inert gas flow with cycled temperature

A next Li-Ni-Cu alloy experiment has been carried out with an Ar-flow based setup. 15 g of Constantan foil and 0.5 g of Li wire (giving an overall mass distribution of 53.2% Cu, 43.5% Ni and 3.2% Li) were loaded into an open TZM metal tube. The TZM tube has been placed into a ceramic tube flooded with an Ar flow to maintain an atmosphere chemically inert to the elements of the metal alloy. An N-type thermocouple was placed between the TZM and ceramic tubes. The reactor's power consumption was measured by a Voltcraft EL 4000 device.

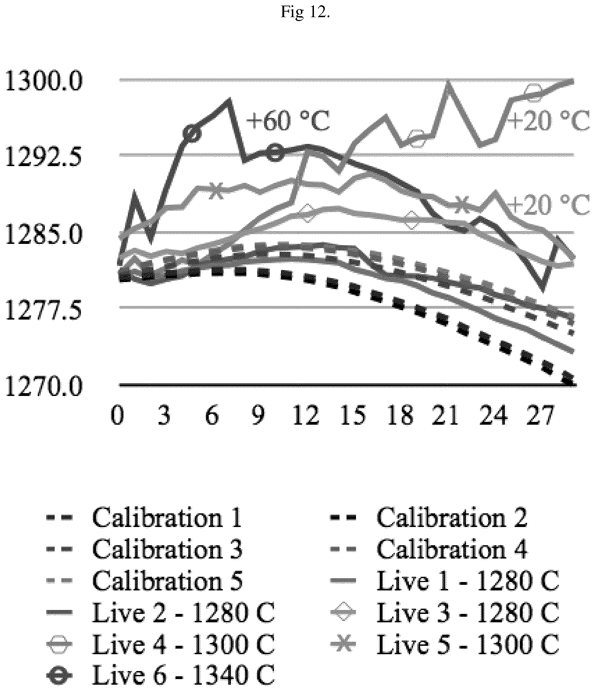

This experiment was aimed at quantifying the reaction power and reaction heat production. A calibration test was performed on the empty reactor with no Ar flow, using the following temperature cycling program: constant power heating from 1200 °C to 1280 °C, no heating when the 1280 °C upper temperature threshold was reached, and then constant power heating from the 1200 °C lower temperature threshold. The employed heating power was approximately 1.5 kW. The dashed lines on Fig 12 show 30 second segments of temperature evolution, starting from the moment when heating was stopped. The cooling rate was slightly decreasing in subsequent cycles as the insulating outer reactor walls gradually heated.

The live test run was started from the same room temperature initial condition as the calibration run, and upon reaching 1200 °C the initial three cycles used the same heating program cycling between the 1200 °C and 1280 °C thresholds. The solid lines of Fig 12 show the temperature evolution in these initial cycles, starting from the moment when heating was turned off. The shape and trend of these curves gradually diverged from corresponding calibration curves, indicating a start-up of the reaction. An exothermic reaction signature is noticeable in each temperature cycle. In the third cycle, the temperature was rising for 14 seconds after turning off the heating, and stayed above 1280 °C even 30 seconds after turning off the heating.

In the next two temperature cycles the upper threshold limit was adjusted to 1300 °C. For the sake of comparison, Fig 12 shows the corresponding temperature evolution with a -20 °C offset. It is noted that, while Figs 7-8 show the container in almost thermal equilibrium, Fig 12 shows the temperature evolution just after a heating rate of 13.6 °C/min (i.e. and externally supplied heating time of 10 minutes). The strongest self-heating event has been observed in cycle 4; it is therefore used for the peak power rate estimation.

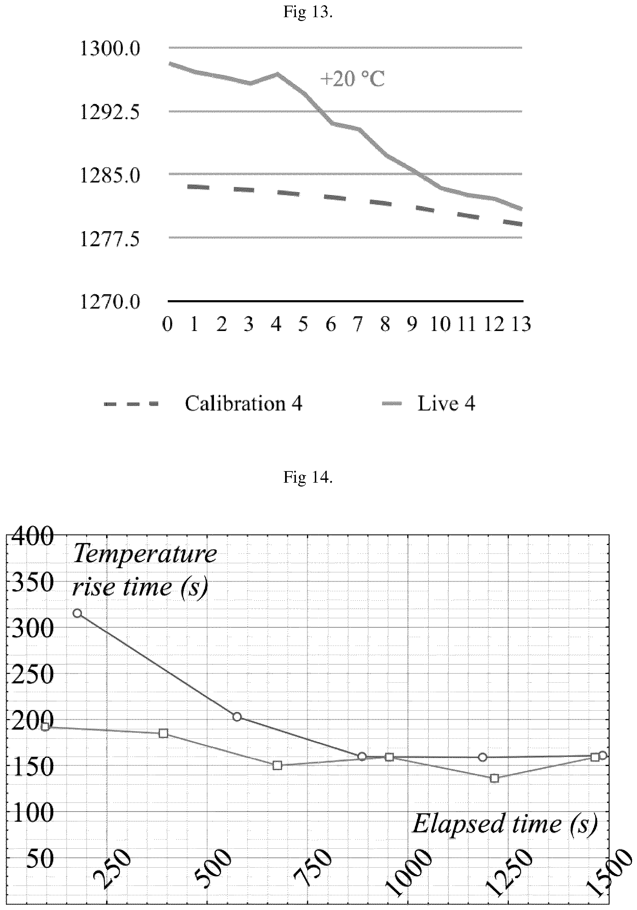

In this temperature range, it takes 1.5 kW to achieve a 13.6 °C/min heating rate. While cycle 4 shows a self-heating rate of approximately 40 °C/min, 30 seconds might be not sufficient to spread the heat evenly in the reactor's interior, i.e. the average heating rate of the whole reactor may be slower. To estimate this heat diffusion effect, Fig 13 compares cycle 4 cooling just after the maximum temperature has been reached. In comparison with the calibration measurement, the live run has four times faster temperature rise during self-heating than during 1.5 kW heating, and also has about four times faster subsequent temperature fall than in the absence of reactor heating. Therefore the self-heating rate of cycle 4 shown in Fig 13 is approximately equivalent to 1.5 kW heating power. This corresponds to a peak power rate of 100 W/g with respect to the mass of reaction materials.

The repeated cycle at 1300 °C showed much smaller self-heating power, essentially maintaining temperature over 30 s. Finally, the last cycle, where the heating went to 1340 °C, showed very fast initial self-heating which extinguished after 7s. This is consistent with the eventless over-1300 °C behavior shown in Fig 8.

The average reaction power was estimated from the electric energy consumption measurements and temperature rise/fall measurements. A temperature rise is defined as the rise from 1200 °C to 1280 °C during the heating cycle. A temperature fall is defined to begin from the heating shut-down and lasts till a subsequent 80 °C temperature fall.

**Table 1. Comparison of power consumption and temperature rise/fall times of the cycles**

| | Electric Power | Duration | trise+tfall tfall |
|---|---|---|---|
| Cal. rise 1 | 1476 W | 353 s | 4.27 |
| Live rise 1 | 1518 W | 192 s | |
| Cal. fall 1 | | 108 s | |
| Live fall 1 | | 105 s | |
| Cal. rise 2 | 1482 W | 226 s | 3.06 |
| Live rise 2 | 1537 W | 185 s | |
| Cal. fall 2 | | 110 s | |
| Live fall 2 | | 119 s | |
| Cal. rise 3 | 1473 W | 177 s | 2.42 |
| Live rise 3 | 1541 W | 150 s | |
| Cal. fall 3 | | 125 s | |
| Live fall 3 | | 117 s | |
| Cal. rise 4 | 1469 W | 174 s | 2.34 |
| Live rise 4 | 1539 W | 159 s | |
| Cal. fall 4 | | 130 s | |
| Live fall 4 | | 120 s | |
| Cal. rise 5 | 1492 W | 164 s | 2.25 |
| Live rise 5 | 1528 W | 136 s | |
| Cal. fall 5 | | 131 s | |
| Live fall 5 | | 106 s | |

With the above definitions and the corresponding measurement data shown in Table 1, the calibration versus live test run cycles can be meaningfully compared. Especially in the initial cycles, the live test rise times were significantly shorter than during calibration, indicating exothermic energy production. The fall times show less difference, which indicates that most of the energy production happens during the temperature rise phases. In fact the latter cycles have slightly faster fall times during the live tests than during calibration. Faster cooling may be explained by the cooling effect of the streaming Ar, which was not applied during calibration, and by the local self-heating during the rising phase, which generates local temperature gradients near the thermocouple and thereby results in somewhat faster subsequent cooling. From the Ar flow rate, it is estimated that the Ar flow transported up to 22 kJ of energy from the system, which we neglect in the reaction energy estimates.

The duration of the initial 4 calibration cycles was very close to the duration of the initial 5 live test cycles. Upon comparing the electric energy consumption between calibration cycles 1-4 and live cycles 1-5, and after adjusting for the few seconds elapsed time mismatch, the obtained difference in the consumed total energy input is used to estimate the total amount of reaction energy. Based on the above numbers, the total amount of produced reaction energy is about 125 kJ. This energy amount is 6 times larger than what could be obtained by burning the enclosed Li metal.

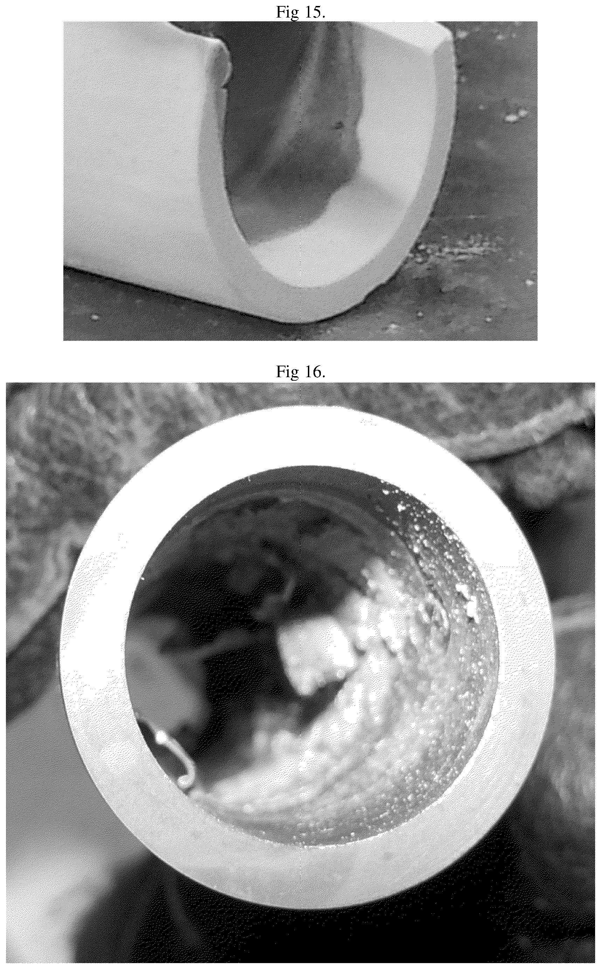

The time-wise distribution of the generated reaction energy can be estimated from Fig 14, which plots the calibration vs. live run rise times as a function of the total elapsed time. Reaction power is generated when the rise time curves are separated, and no reaction power is generated when the rise time curves coincide. It is noted that there is a systematic difference in the electric power between the calibration and live run. These tests have been performed on different days, and it was noticed that this power difference corresponds to a variation of the grid voltage. An adjustment is therefore applied to the calibration rise times to account for this power difference. The last column of Table 1 estimates the effectiveness of the reactor walls' insulation; this factor characterizes the rise times' sensitivity to the input power ratio. The circles in Fig 14 include this power mismatch related adjustment. With this adjustment, the blue curve converges to a highly stable value, indicating the good precision of this time-resolved calorimetry method. It is seen from the squares of Fig 14 that the reaction energy was mainly produced in the first 13 minutes of the test run. Considering also the strong energy generation shown by the Live-4 curve of Fig 12, which corresponds to about 30 kJ energy production, we conclude that the bulk of reaction energy production takes place in the first 17 minutes. Although Figs 15 and 17 show signatures of subsequent reaction events as well, the energy production is strongly diminished in this latter part of the test.

In summary, the exothermic reaction produces 125 kJ energy within the first 17 minutes of the experiment, i.e. a 120 W heat output, and produces much less output heat in the remaining minutes of the experiment. The average power production rate is therefore 8 W/g with respect to the mass of reaction materials.

Considering all experimental observations, we conclude that the exothermic reaction raises the reaction hot-spots' temperature well above the Li boiling point. In this example, the falling reaction power shown in Fig 14 was caused by Li depletion, as the evaporated Li has been carried away by the Ar flow. Fig 15 shows the blackened inner surface of the ceramic tube downstream, onto which Li has been precipitating out. No discoloration of the tube has been seen upstream.

Fig 16 shows the post-experiment view of the reaction tube. Parts of the metal foils have retained their original shape, parts have have melted around the tube walls, and parts have clumped together, e.g. the piece seen in the middle of the image. The de-alloying of Copper was clearly observed along the walls.

### Example 8: Continuous energy production from a Li-Ni-Cu alloy in a TZM container

A next molten Li-Ni-Cu alloy experiment was carried out with a N₂-flow based setup: 9.52 g Constantan foils and 0.28 g Li pieces were loaded into a steel tube, and sealed by welding. This steel container was then placed into a TZM (99.4% Mo, 0.5% Ti, 0.1% Zr) metal tube, and sealed by welding.

The reactor was equipped with two thermocouples; the 1st one above the TZM container, and the 2nd one approximately above the N2-flow inlet. The N2-flow was leaving the reactor through small fissures at the top of the reactor chamber. The 1st thermocouple was used for the heating control feedback.

A calibration run was first performed for measuring the baseline power consumption, followed by the live experiment run. Both runs used the same temperature program, the only difference was the absence of the TZM container in the calibration run. The temperature program consisted of ramping up the reactor temperature to its operational range over 13 hours, followed by the temperature cycling program: constant power heating was used from 1240 °C to 1300 °C, the heating was turned off at the 1300 °C upper temperature threshold, and then the constant power heating was turned back on at the 1240 °C lower temperature threshold. The employed heating power was approximately 1.2 kW.

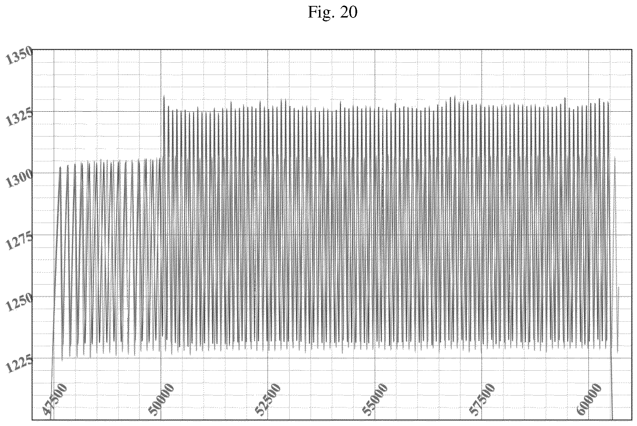

Fig 20 shows the comparative temperature evolution of the 1st thermocouple during calibration (gray curve) and live run (black curve). The vertical axis shows the temperature, and the horizontal axis shows the number of seconds since the start of the temperature program. The 47500 s value corresponds to the starting time of temperature cycling in the 1240 °C to 1300 °C operating range. The very similar initial periodicity of the two curves indicates that the heating and cooling powers are nearly the same at the start. The 60500 s value corresponds to the breaking of the heating wire during the live run; the subsequent drop in temperature is seen at the right.

It can be seen in Fig 20 that the calibration run proceeded as expected through this time window. During the initial half hour, the temperature evolution of the live run corresponded closely to the temperature evolution during the calibration. About 30 min into the temperature cycling, the abrupt rise of the maximum live temperature to 1325 °C indicated the start-up of the exothermic reaction. Over the subsequent three hours, the very consistent temperature peak values indicated the continuous operation of this reaction. Such continuous operation and good controllability are essential for any industrial applicability of this new energy source.

Quantitatively, the average reaction power was measured from the time ratio of electric heating-on times, summarized in Table 2. During the initial half-hour of the temperature cycling, the calibration and live run heating-on time ratios are very similar. The average grid voltage during calibration is 234 V, while the average grid voltage during live run is 232 V; i.e. the electric heating power is 1.7% higher during calibration. Altogether, the electric power input is measured to be 5% higher during calibration. At least part of this power mismatch may be caused by some initial bursts of the exothermic reaction.

**Table 2. Ratio of electric heating ON times**

| | Calibration | Live run |
|---|---|---|
| 47800 - 49800 s | 0.63 | 0.61 |
| 50200 - 60200 s | 0.58 | 0.33 |

During the last three hours of the experiment, the mismatch between the heating-on time ratios was 0.25. This means that the reaction power was equivalent to having electric heating on 25% of the time. Since the electric heating power was 1.2 kW, the average reaction power was 300 W. This corresponds to 30 W/g average reaction power with respect to the fuel mass.

The cumulative reaction energy over these last three hours was over 3 MJ. This amount of reaction energy is larger than any possible chemical reaction. The airtight TZM container has remained intact by the end of the experiment run.

## Claims

1. A method for producing electric energy from heat, **characteriz ed** in that the conversion from heat energy to electric energy is performed by means of a thermophotovoltaic arrangement, comprising: providing a hot surface [10], providing a first stage photovoltaic element [12] having a surface [12] facing the hot surface [10] to produces a first stage electricity output [14], providing a photoemissive LED surface [16] on the back side [17] of the first stage photovoltaic element [12] and providing a second stage photovoltaic element [18]with a surface facing the forward-biased photovoltaic element [12] to produce a second stage electricity output [19].

2. The method of claim 1 wherein all or part of the hot surfaces are coated by a frequency-selectively emissive material.

3. The method of any of claims 1 to 2 wherein the photoemissive LED surface on the back-side of the first stage photovoltaic surface is controlled through the application of forward voltage bias.

4. The method of any of claims 1 to 3, wherein the temperature cycling of the hot surface is accomplished by controlled passing or reflecting of thermal radiation between the hot surface and the first stage photovoltaic surface.

5. A thermophotovoltaic apparatus for producing electric energy from heat, **characterized in that** the apparatus comprises one or more hot surfaces [10], one or more first stage photovoltaic surfaces [12] facing said one or more hot surfaces [10], a photoemissive LED surface [16] on the back side [13] of said one or more first stage photovoltaic surfaces [12] and one or more second stage photovoltaic surfaces [18] facing the one or more first stage photovoltaic surfaces [12].

6. The apparatus of claim 5, wherein all or part of the hot surfaces are coated by a frequency-selectively emissive material.

7. The apparatus of any of claims 5 to 6, further comprising means for controlling the photoemissive LED surface on the back-side of said one or more first stage photovoltaic surfaces through the application of forward voltage bias.

8. The apparatus of any of claims 5 to 7, further comprising means to control the passing or reflecting of thermal radiation between the hot surface and the first stage photovoltaic surface.
